Europäisches Patentamt

European Patent Office

Office européen des brevets

(11) Veröffentlichungsnummer: **0 432 478 A1**

# EUROPÄISCHE PATENTANMELDUNG

(21) Anmeldenummer: 90121654.9

(22) Anmeldetag: 13.11.90

(51) Int. Cl.⁵ **E06B 3/26**, F16B 5/00, F16B 11/00

(30) Priorität: 02.12.89 DE 3939968

(43) Veröffentlichungstag der Anmeldung:
**19.06.91 Patentblatt 91/25**

(84) Benannte Vertragsstaaten:
**AT BE CH DE DK FR GB IT LI LU NL SE**

(71) Anmelder: SCHÜCO INTERNATIONAL KG
Karolinenstrasse 1-15
W-4800 Bielefeld 1(DE)

(72) Erfinder: Habicht, Siegfried
Marderweg 7a
W-4811 Leopoldshöhe(DE)

(74) Vertreter: Stracke, Alexander, Dipl.-Ing. et al
Jöllenbecker Strasse 164
W-4800 Bielefeld 1(DE)

(54) Verbundprofil, insbesondere für Fenster, Türen und Fassaden.

(57)
1. Verbundprofil , insbesondere für Fenster, Türen
und Fassaden

2.1 Der Erfindung liegt die Aufgabe zugrunde, ein
Verbundprofil, bestehend aus zwei Metallprofilen,
die im Abstand voneinander gehalten und über
mindestens einen in Nuten (7) der Metallprofile
eingesetzten Isolierstab (3) miteinander verbunden sind, so zu gestalten, daß der in Aufnahmenuten (10) der Isolierstäbe (3) eingelegte Metalldraht (11) tiefe, gleichmäßig über die Länge verteilte Ausnehmungen zum Einformen des Materials der Nutstege des zugeordneten Metallprofils
und des Materials des oder der Isolierstäbe aufweist und die Maßhaltigkeit des Metalldrahtes für
einen ordnungsgemäßen Montagesitz gewährleistet ist.

2.2 Diese Aufgabe wird dadurch gelöst, daß der
Metalldraht (11) aus einem geradlinig sich erstrek-
kenden Kerndraht und einem um den Kerndraht
schraubenlinienförmig gewundenen Außendraht
(13) mit auseinandergezogenen Wendeln besteht.

2.3 Das Verbundprofil wird im Hochbau für die
Erstellung von Fenstern, Türen und Fassaden eingesetzt.

3. Fig. 3

Fig. 3

EP 0 432 478 A1

## VERBUNDPROFIL, INSBESONDERE FÜR FENSTER, TÜREN UND FASSADEN

Die Erfindung bezieht sich auf ein Verbundprofil, insbesondere für Fenster, Türen und Fassaden, bestehend aus zwei Metallprofilen, die im Abstand voneinander gehalten und über mindestens einen, in Nuten der Metallprofile eingesetzten Isolierstab miteinander verbunden sind, wobei die Nutstege der Metallprofile in in Längsrichtung des Isolierstabes durchgehend verlaufend Aussparungen des Isolierstabes durch plastische Verformung formschlüssig festgelegt sind und der Isolierstab innerhalb der von den Nuten der Metallprofile aufgenommenen Randbereiche jeweils mindestens eine zu dem jeweiligen Metallprofil geöffnete Aufnahmenut aufweist, in der ein Metalldraht mit Verankerungsvorsprüngen angeordnet ist, die sich bei der Verformung der Nutstege in die Metallprofile und in den Isolierstab bzw. in die Isolierstäbe eingraben.

Es ist ein Verbundprofil dieser Art bekannt (DE-PS 29 37 454), bei dem der Metalldraht mit einer Rändelung versehen ist, um Verankerungsvorsprünge zu erhalten, die bei der Verformung der Nutstege sich in die Metallprofile und in die Isolierstäbe eingraben und aufgrund des sich zwischen den genannten Teilen ergebenden Formschlusses die Schubfestigkeit des Verbundprofils erhöhen.

Aus der genannten Literaturstelle ist es ferner bekannt, als Metalldraht einen Mehrkantdraht zu verwenden, der verdrillt wird, um in Längsrichtung wirksame Vorsprünge zu erhalten.

Sowohl beim Rändeln eines im Querschnitt runden Metalldrahtes als auch beim Verdrillen eines Mehrkantdrahtes ist eine besonders ausgeprägte Verformung mit markanten Verankerungsvorsprüngen nicht zu erzielen, insbesondere auch aus dem Grund, da die Maßhaltigkeit des Drahtes für einen ordnungsgemäßen Montagesitz erhalten bleiben muß.

Der Erfindung liegt die Aufgabe zugrunde, ein Verbundprofil der eingangs genannten Art so zu gestalten, daß der Metalldraht tiefe, gleichmäßig über die Länge verteilte Ausnehmungen zum Einformen des Materials der Nutstege des zugeordneten Metallprofils und des Materials des oder der Isolierstäbe aufweist und die Maßhaltigkeit des Metalldrahtes für einen ordnungsgemäßen Montagesitz gewährleistet ist.

Diese Aufgabe wird nach der Erfindung dadurch gelöst, daß der Metalldraht aus einem geradlinig sich erstreckenden Kerndraht und einem um den Kerndraht schraubenlinienförmig gewundenen Außendraht mit auseinandergezogenen Wendeln besteht.

Zwischen den einzelnen Wendeln bildet der Außendraht Ausnehmungen zum Einformen des Materials der Nutstege und der Isolierstäbe, die durch den Kerndraht begrenzt werden. Die Tiefe dieser Ausnehmungen wird somit durch den Durchmesser des Außendrahtes bestimmt.

Beim Aufpressen eines Nutsteges auf den Metalldraht bildet der Kerndraht das Wider··· ··r während die Wendeln des Außendrahtes in das Material des Nutsteges und des Isc stabes eingraben. Nach der Fertigstellung Verbundprofils ist somit der gewendelte Auß draht des Metalldrahtes sowohl in das Kun· · stoffmaterial des Isolierstabes als auch in das Metallmaterial des Nutsteges eingebettet, so daß durch diesen gewendelten Außendraht die Schubfestigkeit des Verbundprofils in Längsrichtung des Profils wesentlich erhöht wird.

Der Kerndraht und der gewendelte Außendraht werden vorzugsweise aus einer Aluminiumlegierung gefertigt, deren Festigkeit größer ist als die des Kunststoffmaterials des Isolierstabes und des Materials der Metallprofile.

Bei einer vorteilhaften Ausführungsform des erfindungsgemäßen Metalldrahtes ist der Außendraht mit einem Schmelzkleber beschichtet, der bei den bei den Oberflächenbehandlungen der Metallprofile, wie Eloxieren und Beschichten, auftretenden Temperaturen aktiviert wird.

Weitere Merkmale des Gegenstandes der Erfindung ergeben sich aus den Unteransprüchen.

Ausführungsbeispiele der Erfindung sind in den Zeichnungen dargestellt und werden im folgenden beschrieben. Es zeigen:

Fig. 1 ein aus zwei Metallprofilen und zwei Isolierstäben bestehendes Verbundprofil vor der Verbindung der genannten Teile im Querschnitt,

Fig. 2 das Verbundprofil nach der Fig. 1 im gebrauchsfertigen Zustand,

Fig. 3 den Punkt III in der Fig. 1,

Fig. 4 den Punkt IV in der Fig. 2,

Fig. 5 eine Teilansicht eines abgewandelten Verbundprofils im Schnitt und

Fig. 6 den aus einem Kerndraht und einem gewendelten Außendraht bestehenden Metalldraht in vergrößertem Maßstab.

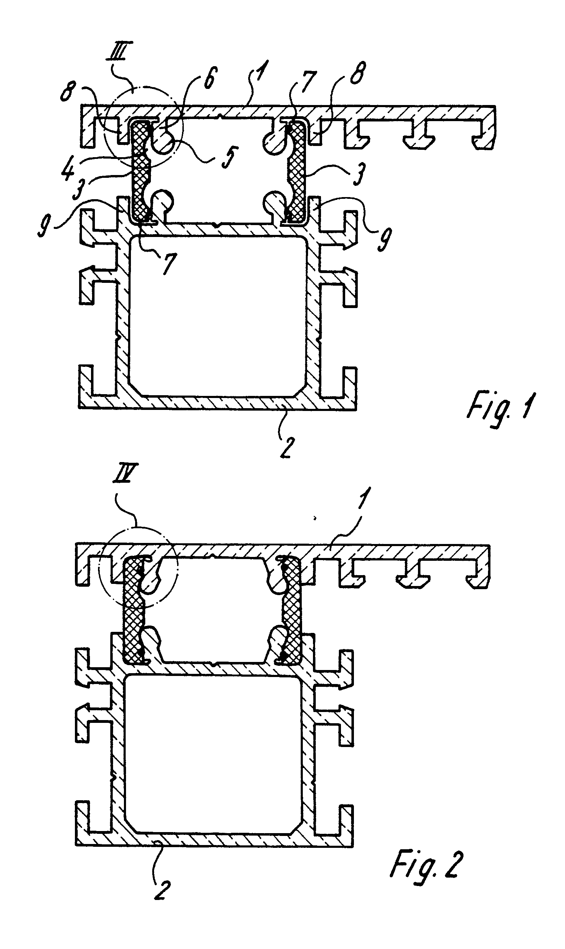

Das in den Fig. 1 und 2 aufgezeigte Verbundprofil besteht aus den Metallprofilen 1,2 und den Isolierstäben 3. Die Isolierstäbe weisen in Längsrichtung sich erstreckende Aussparungen 4 auf, in die, wie sich aus der Fig. 2 ergibt, zur Verbindung der Metallprofile 1,2 mit den Isolierstäben 3 Wulstränder 5 von Nutstegen 6 der Metallprofile 1,2 eingeformt werden.

Die aus Kunststoff gefertigten Isolierstäbe 3 weisen eine so hohe Festigkeit auf, daß sie vollständig oder weitgehend bei der Einformung der Wulstränder 5 in die Aussparungen 4 ihre Querschnittsform beibehalten.

Die Isolierstäbe werden, wie sich aus den Fig. 1 und 2 ergibt, in ihren Randbereichen von Nuten 7 der Metallprofile aufgenommen. Diese Nuten 7 werden einerseits durch die Nutstege 6 und andererseits durch Nutstege 8 und 9 der Metallprofile begrenzt.

In diesen Randbereichen der Isolierstäbe 3 sind Aufnahmenuten 10 vorgesehen, die beim Extrudieren der Isolierstäbe in die Isolierstäbe ein-geformt werden und sich somit über die gesamte Länge der Isolierstäbe erstrecken. Diese Nuten 10 dienen zur Aufnahme eines Metalldrahtes 11, der aus einem geradlinig sich erstreckenden Kerndraht 12 und einem um den Kerndraht schraubenlinienförmig gewundenen Außendraht 13 mit auseinandergezogenen Wendeln 14 besteht. Der Kerndraht 12 und der Außendraht 13 sind aus einer Aluminiumlegierung, z.B. aus Al-Mg gefertigt. Der Kerndraht und der Außendraht weisen eine größere Festigkeit auf als die Isolierstäbe 3 und die Metallprofile 1 und 2.

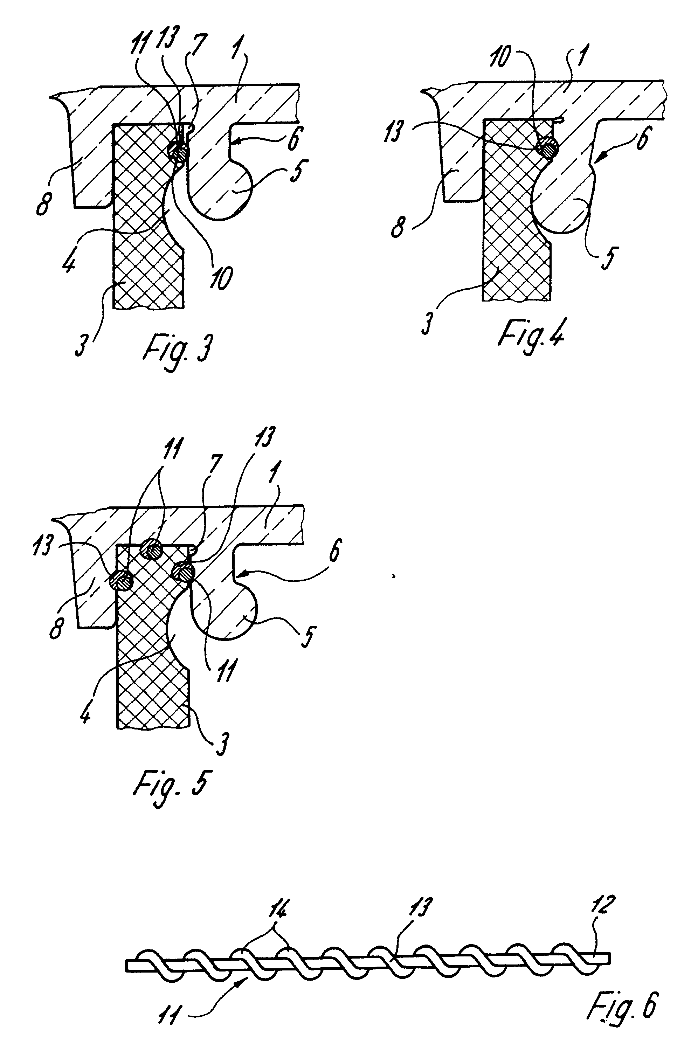

Bei der Verformung des Nutsteges 6 von der in der Fig. 3 aufgezeigten Lage in die Lage nach der Fig. 4 gräbt sich der gewendelte Außendraht 13 in das Material des Nutsteges 6 und in die Begrenzungsflächen der Nut 10 ein. Hierdurch wird die Schubfestigkeit zwischen den Metallprofilen und dem Isolierstab bzw. den Isolierstäben erhöht.

Der gewendelte Außendraht kann sich aus mehreren Drahtabschnitten zusammensetzen.

Der Außendraht kann ferner mit einem Schmelzkleber beschichtet sein, der bei den Temperaturen der Oberflächenbehandlungen, wie Eloxieren und Beschichten, weich wird und nach dem Erkalten eine Verklebung und/ oder einen Toleranzausgleich bildet, da der Kleber mögliche Schrumpfungshohlräume füllt und damit auch nach einer Wärmebehandlung die Schubfestigkeit in Hinsicht auf den Formschluß sicherstellt.

Der Durchmesser des Kerndrahtes 12 und der Durchmesser des Außendrahtes 13 können ca. 0,5 mm betragen.

Aus der Fig. 5 ergibt sich, daß der Isolierstab 3 in dem Randbereich, in dem er in die Nut 7 des Metallprofils 1 bzw. 2 eintaucht, mit mehreren Nuten 10 zur Aufnahme von Metalldrähten 11 ausgerüstet sein kann.

Bezugszeichen

| 1 | Metallprofil |
|---|---|
| 2 | Metallprofil |
| 3 | Isolierstab |
| 4 | Aussparung |
| 5 | Wulstrand |
| 6 | Nutsteg |
| 7 | Nut |
| 8 | Nutsteg |
| 9 | Nutsteg |
| 10 | Nut |
| 11 | Metalldraht |
| 12 | Kerndraht |
| 13 | Außendraht |
| 14 | Wendel |

**Ansprüche**

1. Verbundprofil, insbesondere für Fenster, Türen und Fassaden, bestehend aus zwei Metallprofilen, die im Abstand voneinander gehalten und über mindestens einen, in Nuten der Metallprofile eingesetzten Isolierstab miteinander verbunden sind, wobei die Nutstege der Metallprofile in in Längsrichtung des Isolierstabes durchgehend verlaufende Aussparungen des Isolierstabes durch plastische Verformung formschlüssig festgelegt sind und der Isolierstab innerhalb der von Nuten der Metallprofile aufgenommenen Randbereiche jeweils mindestens eine zu dem jeweiligen Metallprofil geöffnete Aufnahmenut aufweist, in der ein Metalldraht mit Verankerungsvorsprüngen angeordnet ist, die sich bei der Verformung der Nutstege in die Metallprofile und in den Isolierstab bzw. in die Isolierstäbe eingraben, **dadurch gekennzeichnet,** daß der Metalldraht (11) aus einem geradlinig sich erstreckenden Kerndraht (12) und einem um den Kerndraht schraubenlinienförmig gewundenen Außendraht (13) mit auseinandergezogenen Wendeln (14) besteht.

2. Verbundprofil nach Anspruch 1, dadurch gekennzeichnet, daß der gewendelte Außendraht (13) aus mehreren Drahtabschnitten sich zusammensetzt.

3. Verbundprofil nach Anspruch 1 oder 2, dadurch gekennzeichnet, daß der Außendraht (13) mit einem Schmelzkleber beschichtet ist, der bei den bei den Oberflächenbehandlungen der Metallprofile (1,2), wie Eloxieren und Beschichten, auftretenden Temperaturen aktiviert wird.

4. Verbundprofil nach einem der vorhergehenden Ansprüche, dadurch gekennzeichnet, daß der Kerndraht (12) und der Außendraht (13) aus einer Aluminiumlegierung gefertigt sind.

5. Verbundprofil nach Anspruch 4, dadurch gekennzeichnet, daß der Kernkraht (12) und der Außendraht (13) aus der Aluminiumlegierung Al-Mg hergestellt sind.

6. Verbundprofil nach einem der Ansprüche 1 bis 5, dadurch gekennzeichnet, daß der Durchmesser des Kerndrahtes (12) und der Durchmesser des Außendrahtes (13) ca. 0,5 mm betragen.

EP 0 432 478 A1

Fig. 1

Fig. 2

5

Fig. 3

Fig. 4

Fig. 5

Fig. 6

| | Europäisches Patentamt | EUROPÄISCHER RECHERCHENBERICHT | Nummer der Anmeldung<br>EP 90 12 1654 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | DE-A-2 937 454   (SCHÜCO)<br>* Seite 6, Zeile 14 - Seite 7, Zeile 23; Seite 9, Zeile 6 - Seite 10, Zeile 3; Abbildungen 1,2,9,10 *<br>– – – | 1,4,5 | E 06 B<br>3/26<br>F 16 B 5/00<br>F 16 B 11/00 |
| Y | US-A-4 106 179   (BLECKMANN)<br>* Spalte 2, Zeilen 19-35; Spalte 2, Zeile 64 - Spalte 3, Zeile 17; Spalte 4, Zeile 48 - Spalte 5, Zeile 43; Spalte 8, Zeile 7 - Spalte 9, Zeile 16; Spalte 9, Zeile 30 - Spalte 10, Zeile 51; Abbildungen 1-5,19-31 *<br>– – – | 1,4,5 | |
| A | FR-A-2 364 075   (ELPAG AG CHUR)<br>* Seite 15, Zeile 32 - Seite 16, Zeile 5; Anspruch 1; Abbildungen 28,29 *<br>– – – | 1 | |
| A | EP-A-0 043 968   (PLASTIC-WERK A.U.G. SCHERER & TRIER)<br>* Seite 2, Zeile 6 - Seite 3, Zeile 1; Seite 4, Zeile 21 - Seite 6, Zeile 10; Anspruch 1; Abbildungen 1-3 *<br>– – – – – | 3 | |

| RECHERCHIERTE SACHGEBIETE (Int. Cl.5) |
|---|
| E 06 B<br>F 16 B |

Der vorliegende Recherchenbericht wurde für alle Patentansprüche erstellt

| Recherchenort | Abschlußdatum der Recherche | Prüfer |
|---|---|---|
| Den Haag | 08 März 91 | DEPOORTER F. |